# EUROPEAN PATENT APPLICATION

(11) **EP 4 772 840 A2**
(43) Date of publication of application: **08.07.2026**
(21) Application number: 26171418.2
(22) Date of filing: 16.10.2023
(51) Int. Cl.: G01D 5/20

(54) **POSITION DETECTION DEVICE**

(30) Priority: 28.10.2022 JP 2022173747
(62) Divisional of application: 23882483.3
(71) Applicant: DENSO CORPORATION, Kariya-city, Aichi-pref., 448-8661 (JP)
(72) Inventor: OGINO, Mutsuhito, Kariya-city, Aichi-pref., 448-8661 (JP); HARADA, Tomoyuki, Kariya-city, Aichi-pref., 448-8661 (JP)
(74) Representative: Kuhnen & Wacker Patent- und Rechtsanwaltsbüro PartG mbB

(57) **Abstract**

A position detection device includes a substrate (100) arranged facing a detection body (30), a transmitting coil (110) formed on the substrate, a first receiving coil (120) and a second receiving coil (130) arranged inside the transmitting coil in a normal direction, and a plate-shaped accommodation portion (500) that accommodates the substrate and has a plate thickness direction in the normal direction. The accommodation portion has an arrangement part (511) in which the substrate is arranged and a mounting part (512) for mounting the accommodation part. The accommodation portion has a connecting part (513) that connects the mounting part and the arrangement part. The connecting part has at least one of two structures: a structure in which a size in the first direction is smaller than that of the arrangement part, and a structure in which a size in the third direction is smaller than that of the arrangement part. The arrangement part has a rigid portion (600, 610, 620, 630, 631, 632, 633, 634, 635, 636, 637) that is formed to be larger in size in the plate thickness direction than other portions of the arrangement part.

## Description

### CROSS REFERENCE TO RELATED APPLICATION

The present application is based on Japanese Patent Application No. 2022-173747 filed on October 28, 2022, the description of which is incorporated herein by reference.

### TECHNICAL FIELD

The present disclosure relates to a position detection device.

### BACKGROUND

Conventionally, a rotation angle detection sensor has been known which includes a sensor body having a coil arranged on a plate-shaped substrate, and a rotor arranged facing the sensor body and having an encoder structure formed thereon (see, for example, Patent Document 1). This rotation angle detection sensor detects a rotation angle of the rotor based on a magnetic flux passing through the coil, which changes as a width dimension of a conductor pattern of the encoder structure facing the coil changes as the rotor rotates.

### PRIOR ART DOCUMENT

### PATENT DOCUMENT

Patent Document 1: Japanese Patent No. 5226694

### SUMMARY OF INVENTION

Incidentally, in order to protect a plate-shaped substrate on which a coil is arranged as described in Patent Document 1, the substrate may be enclosed in an encapsulating member. For this reason, the inventors have considered enclosing the substrate in the plate-shaped encapsulating member having the same shape as the substrate. The inventors then considered positioning the enclosing member enclosing the substrate in a position facing the detection body, which is the rotor, and mounting the enclosing member to a surface of a mounting object that cannot rotate relative to the detection body, using fastening members such as screws.

However, due to a temperature change in the environment in which the mounting object and the encapsulating member are placed, the mounting object and the encapsulating member may thermally expand and deform. Furthermore, when the mounting object and the encapsulating member thermally expand, if an amount of deformation between the mounting object and the encapsulating member differs due to the difference in thermal expansion coefficient between the mounting object and the encapsulating member, there is a risk that the plate-shaped encapsulating member will warp and deform.

Then, the substrate enclosed in the encapsulating member warps together with the encapsulating member, causing a change in the distance between the detection body and a coil disposed on the substrate. When the distance between the detection object and the coil changes, the magnetic flux passing through the coil when detecting the position of the detection object changes. As a result of detailed investigations, the inventors have found that changes in the magnetic flux passing through the coil when detecting the position of the detection body became a factor that reduces the detection accuracy of the position of the detection body.

An object of the present disclosure is to provide a position detection device capable of suppressing a decrease in a detection accuracy.

According to one aspect of the present disclosure,
a position detection device includes:
a substrate disposed facing a detection body which is rotatable;
a transmitting coil formed on the substrate;
a first receiving coil and a second receiving coil disposed inside the transmitting coil in a normal direction relative to a surface direction of the substrate; and
an accommodation portion that is a plate-shaped structure for accommodating the substrate and has a plate thickness direction in the normal direction.

The accommodation portion has an arrangement part in which the substrate is arranged, a mounting part for mounting the accommodation portion, and a connecting part for connecting the mounting part and the arrangement part.

When the plate thickness direction is defined as a first direction, a direction from the arrangement part toward the mounting part is defined as a second direction, and a direction intersecting the first and second directions is defined as a third direction, the connecting part has at least one of two structures: one in which the magnitude in the first direction is smaller than the magnitude of the arrangement part in the first direction, and the other in which the magnitude in the third direction is smaller than the magnitude of the arrangement part in the third direction.

According to this configuration, a rigidity of the connecting part is smaller than the rigidity of the arrangement part. Therefore, when the accommodation portion is entirely deformed due to thermal expansion, the connecting part is more likely to deform than the arrangement part.

Therefore, even if the accommodation portion is entirely deformed due to thermal expansion, the amount of deformation of the arrangement part is suppressed by the deformation of the connecting part. This reduces the amount of deformation of the substrate when the substrate arranged on the arrangement part deforms integrally with the arrangement part.

As a result, the amount of change in the distance between the detection object and the first receiving coil is suppressed, and the amount of change in the distance between the detection object and the second receiving coil is also suppressed. The amount of change in the magnetic flux passing through each of the first receiving coil and the second receiving coil when detecting the position of the detection body is suppressed. This makes it possible to suppress a decrease in detection accuracy when detecting the position of the detection object.

Also, according to another aspect,
a position detection device includes:
a substrate disposed facing a detection body which is rotatable;
a transmitting coil formed on the substrate;
a first receiving coil and a second receiving coil disposed inside the transmitting coil in a normal direction relative to a surface direction of the substrate; and
an accommodation portion that is a plate-shaped structure for accommodating the substrate and has a plate thickness direction in the normal direction.

The accommodation portion has an arrangement part in which the substrate is arranged and a mounting part for mounting the accommodation part.

The arrangement part has a rigid portion that is formed to be larger in size in the plate thickness direction than other portions of the arrangement part.

According to this configuration, the rigidity of the arrangement part can be increased compared to a configuration in which the arrangement part does not have the rigid portion. Therefore, when the accommodation portion is entirely deformed due to thermal expansion, the arrangement part is less likely to deform compared to a configuration in which the arrangement part does not have the rigid portion. Therefore, even if the accommodation portion is entirely deformed due to thermal expansion when the mounting part is attached, the amount of deformation of the arrangement part is suppressed. This reduces the amount of deformation of the substrate when the substrate arranged on the arrangement part deforms integrally with the arrangement part.

As a result, the amount of change in the distance between the detection object and the first receiving coil is suppressed, and the amount of change in the distance between the detection object and the second receiving coil is also suppressed. The amount of change in the magnetic flux passing through each of the first receiving coil and the second receiving coil when detecting the position of the detection body is suppressed. This makes it possible to suppress a decrease in detection accuracy when detecting the position of the detection object.

The reference numerals in parentheses attached to the components and the like indicate an example of correspondence between the components and the like and specific components and the like described in an embodiment to be described below.

### BRIEF DESCRIPTION OF DRAWINGS

FIG. 1 is a block diagram of an electrification system configured using a position detection device of a first embodiment;
FIG. 2 is a diagram showing a relationship between the position detection device and a drive unit;
FIG. 3 is a top view of a rotating flat plate and the position detection device;
FIG. 4 is a perspective view of the position detection device according to the first embodiment;
FIG. 5 is a cross-sectional view of the position detection device taken along a line V-V in FIG. 4;
FIG. 6 is a schematic diagram showing the shapes of a transmitting coil, a first receiving coil, and a second receiving coil;
FIG. 7 is a block diagram of a position detection device;
FIG. 8 is a perspective view of a position detection device according to a second embodiment; and
FIG. 9 is a side view of the position detection device according to the second embodiment as seen from the direction of the arrow indicated by IX in FIG. 8.

### DETAILED DESCRIPTION

Hereinafter, embodiments of the present disclosure will be described with reference to the drawings. In the following embodiments, parts, which are the same as or equivalent to those described in the preceding embodiment(s), will be indicated by the same reference signs, and the description thereof may be omitted. Also, in the following embodiments, when only some of the constituent elements are described, corresponding constituent elements of a previously described one or more of the embodiments may be applied to the rest of the constituent elements. The respective embodiments described herein may be partially combined with each other as long as no particular problems are caused even without explicit statement of these combinations.

### First Embodiment:

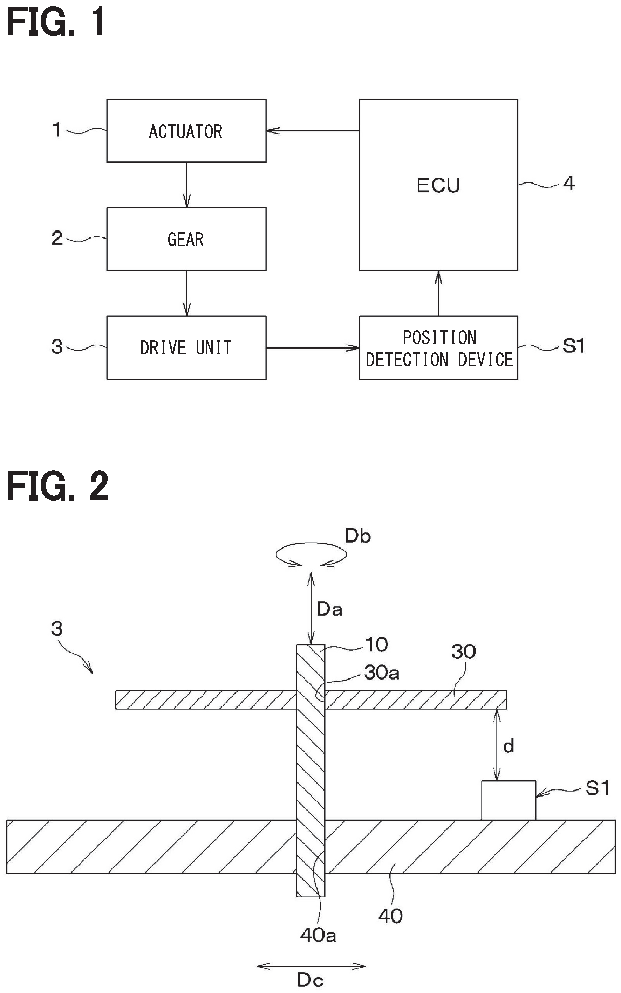

The present embodiment will be described with reference to FIGS 1 to 7. In the present embodiment, as a position detection device, a position detection device that detects rotation of a detection object will be described as an example. In the present embodiment, an example in which the position detection device is applied to an electrification system mounted on a vehicle will be described.

### Electrification system:

As shown in FIG. 1, the electrification system includes an actuator 1, a gear 2, a drive unit 3, an ECU (abbreviation of Electronic Control Unit) 4, and a position detection device S1. The electrification system is operated as follows. That is, the actuator 1 is controlled by the ECU 4, and rotates the gear 2 under the control of the ECU 4. The drive unit 3 includes a detection object (to be described later), and includes components operated by the rotation of the gear 2. The position detection device S1 detects a displacement of the detection object provided in the drive unit 3, and outputs a detection signal to the ECU 4. In the present embodiment, as will be described later, the detection object includes a rotating flat plate 30, and a rotation angle of the rotating flat plate 30 is output to the ECU 4. The ECU 4 controls the actuator 1 in view of the detection signal from the position detection device S1.

Next, a configuration of the drive unit 3 in which the position detection device S1 is disposed will be described. In the present embodiment, an example in which the position detection device S1 is disposed in a motor such as a main motor and an in-wheel motor will be described.

The drive unit 3 is assumed to be, for example, a rotor for a motor, and as shown in FIG. 2, includes a shaft 10 as a rotating shaft, a rotating flat plate 30, a fixed base 40, and the like. These components 10, 30, 40 are arranged coaxially with an axial direction Da of the shaft 10 as the center. In the following description, the axial direction Da of the shaft 10 will be simply referred to as the axial direction Da.

The shaft 10 is, for example, a drive shaft, and is made of a cylindrical member. The shaft 10 is disposed so that a tire is provided on one end side and the other end side opposite to the one end side becomes the vehicle body side. For example, in FIG. 2 , the upper side of the paper corresponds to one end side of the shaft 10, and the lower side of the paper corresponds to the other end side of the shaft 10. Although details are omitted, for example, a rotating wheel and a bearing member (not shown) are attached to the shaft 10, and the rotating wheel is supported by the bearing member in a rotatable state.

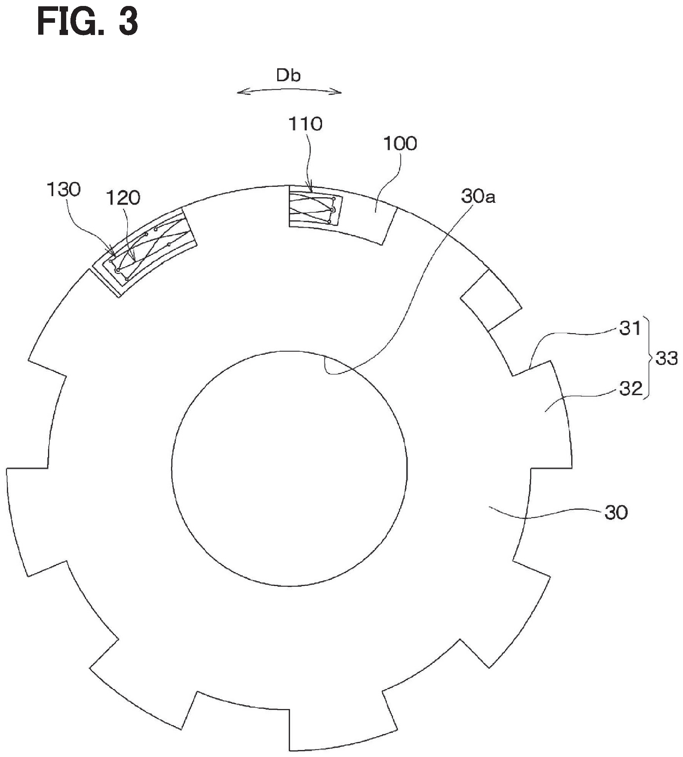

The rotating flat plate 30 is made of metal, and has an annular plate shape having a through hole 30a. As shown in FIG. 3, the rotating flat plate 30 of the present embodiment has a plurality of recesses 31 formed evenly on the outer edge thereof. In other words, the rotating flat plate 30 has a configuration in which a plurality of protrusion portions 32 are arranged on an outer edge along the rotation direction of the shaft 10. In other words, the rotating flat plate 30 has an uneven structure 33 having recesses 31 and protrusion portions 32 formed on its outer edge along the rotation direction of the shaft 10.

As shown in FIG. 2, the rotating flat plate 30 is fixed to the shaft 10 with one end of the shaft 10 inserted into the through hole 30a so as to rotate with the rotation of the shaft 10. In the present embodiment, the rotating flat plate 30 corresponds to the detection object.

The fixed base 40 has a plate shape having a through hole 40a. The other end of the shaft 10 is inserted into the through hole 40a of the fixed base 40, and a rotating wheel (not shown) is disposed in the rotatable state. The fixed base 40 includes the position detection device S1 to face the protrusion portion 32 of the rotating flat plate 30 in the axial direction Da. The fixed base 40 is an object on which the position detection device S1 is attached. As shown in FIG. 3, the position detection device S1 is disposed so as to have a predetermined gap (i.e., distance) d between the fixed base 40 and the rotating flat plate 30.

When the position detection device S1 detects the rotation angle of the motor shaft 10, the position detection device S1 detects the rotation angle of the rotating flat plate 30, which is the detection body, and thereby detects the rotation angle of the shaft 10, which rotates integrally with the rotating flat plate 30. The position detection device S1 is attached to, for example, the stator of a motor which functions as the fixed base 40.

### Position detection device:

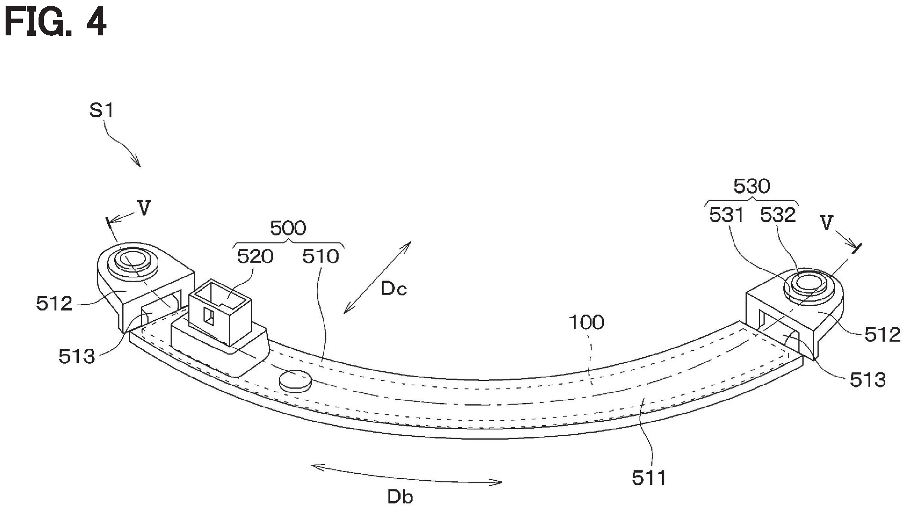

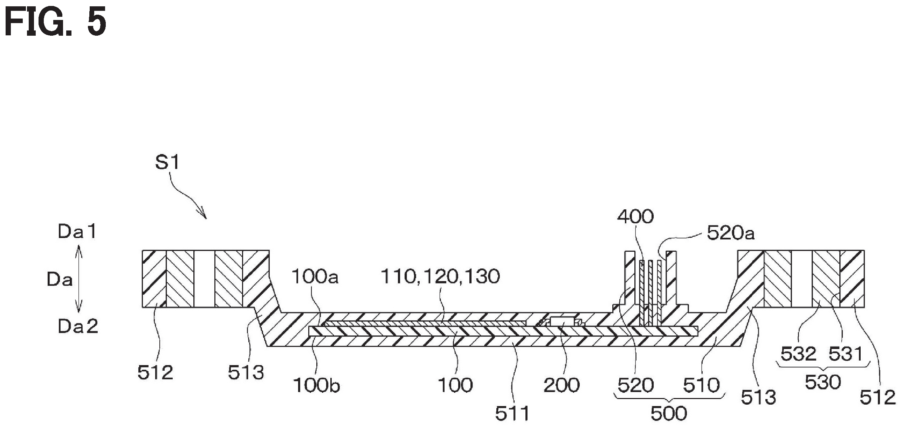

Next, a configuration of the position detection device S1 of the present embodiment will be described. As shown in FIGS. 4 and 5, the position detection device S1 of the present embodiment includes a printed circuit board 100 having one surface 100a and the other surface 100b. In the position detection device S1, a circuit board 200 and a terminal 400 are disposed on one surface 100a side of the printed circuit board 100, and these are integrally sealed by a sealing member 500. Hereinafter, a normal direction with respect to a surface direction (i.e., the board thickness direction) of the printed circuit board 100 will be simply referred to as the normal direction. When the position detection device S1 is provided in the fixed base 40, the normal direction of the printed circuit board 100 coincides with the axial direction Da. Although not particularly shown, various electronic components such as capacitors and resistors are appropriately disposed in the printed circuit board 100.

The printed circuit board 100 of the present embodiment has an arc plate shape. Specifically, the printed circuit board 100 is configured to coincide with an arc of a virtual circle formed around the shaft 10. That is, the printed circuit board 100 has a shape in which a virtual circle having the printed circuit board 100 as an arc coincides with a circle formed around the shaft 10.

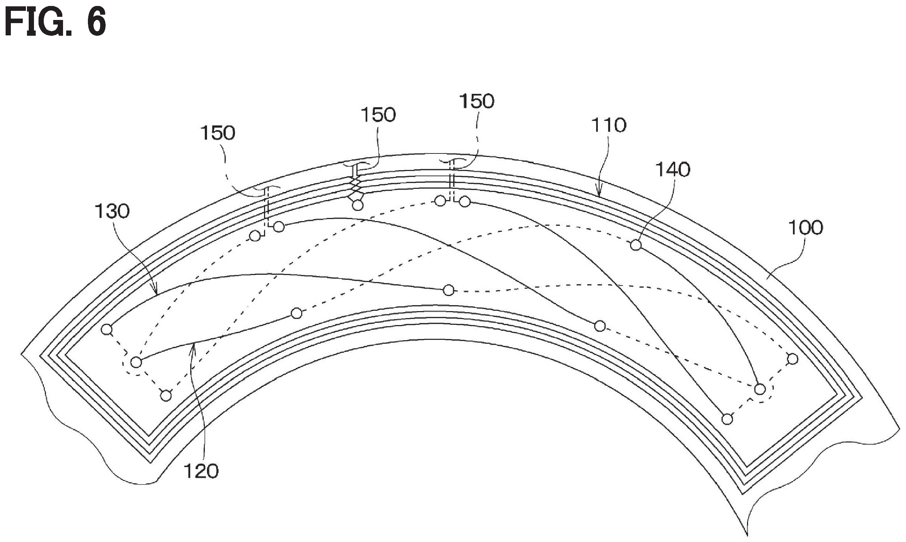

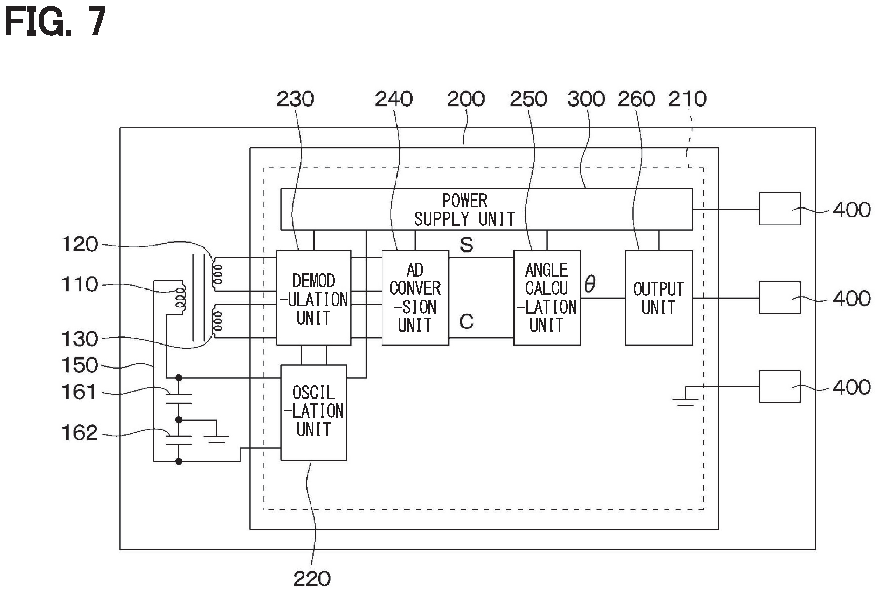

As shown in FIG. 6, the transmitting coil 110, the first receiving coil 120, and the second receiving coil 130 are provided in the printed circuit board 100. As shown in FIG. 7, the printed circuit board 100 is provided with connection wires 150 that connect the circuit board 200 to each of the coils 110, 120, and 130. In FIG. 5, the coils 110, 120, and 130 are shown in a simplified manner.

Specifically, the printed circuit board 100 of the present embodiment is a multi-layer board in which an insulating film and a wiring layer are alternately laminated. As shown in FIG. 6, the wiring layers provided in respective layers are appropriately connected through a vias 140 to provide the respective coils 110, 120, and 130, and the connection wires 150 that connect with each of the coils 110, 120, and 130 are provided. Hereinafter, configurations of the transmitting coil 110, the first receiving coil 120, and the second receiving coil 130 of the present embodiment will be described with reference to FIG. 6.

The transmitting coil 110 is wound multiple times in the normal direction, and is formed into an arc frame shape while one direction (that is, the circumferential direction of the printed circuit board 100) is set as a longitudinal direction. The circumferential direction of the printed circuit board 100 coincides with the rotation direction of the shaft 10 when the position detection device S1 is provided on the fixed base 40.

The first receiving coil 120 and the second receiving coil 130 are disposed inside the transmitting coil 110 in the normal direction. Moreover, the first receiving coil 120 and the second receiving coil 130 are configured by appropriately connecting different wiring layers through a vias 140 so as not to interfere with each other (i.e., not to overlap in the same layer). In the present embodiment, the transmitting coil 110, the first receiving coil 120, and the second receiving coil 130 are configured so that two adjacent wiring layers in sequentially laminated wiring layers are connected by the vias 140. More specifically, in the present embodiment, the transmitting coil 110, the first receiving coil 120, and the second receiving coil 130 are provided by connecting the wiring layer of an outermost layer located on the one surface 100a side in the printed circuit board 100 to the wiring layer as a layer next to the outermost layer. In FIG. 6, the wiring layer provided in the outermost layer in the printed circuit board 100 is shown by a solid line, the wiring layer provided in the layer next to the outermost layer is shown by a dotted line, and the wiring layer of a layer different from the wiring layers provided in the outermost layer and the next layer is shown by a one-dot chain line. The transmitting coil 110 is configured by connecting the outermost wiring layer and the wiring layer next to the outermost wiring layer. Meanwhile, in FIG. 6, all of these are shown by solid lines. In actuality, the transmitting coil 110 has an unicursal shape.

The first receiving coil 120 of the present embodiment is provided to have a closed-loop sine wave shape in the normal direction. The second receiving coil 130 of the present embodiment is provided to have a closed-loop cosine wave shape in the normal direction. As described above, the first receiving coil 120 and the second receiving coil 130 are configured so that the different wiring layers are appropriately connected through the vias 140 not to interfere with each other.

The printed circuit board 100 has multiple pad portions (not shown). As shown in FIG. 5, one end portion of the rod-shaped terminal 400 is connected to the printed circuit board 100 to be connected to the pad portion. The terminal 400 is provided with, for example, three terminals for power supply, ground, and output. For example, the output terminal 400 is connected to the ECU 4 and is used to output the rotation angle of the detection object to the ECU 4. The number of terminals 400 is not particularly limited, and the connection destinations can be changed appropriately depending on the number of terminals 400.

The circuit board 200 is disposed via a joining member (not shown) in a portion of the printed circuit board 100 which is different from portions having the transmitting coil 110, the first receiving coil 120, and the second receiving coil 130. The circuit board 200 is connected to the transmitting coil 110, the first receiving coil 120, and the second receiving coil 130 via the connection wire 150 provided in the printed circuit board 100.

The circuit board 200 includes a microcomputer including a CPU and storage units such as a ROM, a RAM, and a non-volatile RAM, or the like, and is connected to the transmitting coil 110, the first receiving coil 120, and the second receiving coil 130. The circuit board 200 realizes various control operations by the CPU reading and executing programs from the ROM or the non-volatile RAM. The ROM or the non-volatile RAM stores in advance various data (for example, initial values, look-up tables, maps, and the like) used when the programs are executed. The storage medium such as the ROM is a non-transitory tangible storage medium. CPU is an abbreviation for Central Processing Unit, ROM is an abbreviation for Read Only Memory, RAM is an abbreviation for Random Access Memory.

Specifically, as shown in FIG. 7, the circuit board 200 includes a signal processing unit 210 connected to the transmitting coil 110, the first receiving coil 120, and the second receiving coil 130 to perform predetermined processing. The signal processing unit 210 includes, for example, an oscillation unit 220, a demodulation unit 230, an AD conversion unit 240, an angle calculation unit 250, an output unit 260, and a power supply unit 300. In the following, a typical example will be described in which the signal is converted into a digital signal for processing. Meanwhile, in the case of processing with an analog signal, the signal processing unit 210 does not need to include the AD conversion unit 240 and the like.

As shown in FIGS. 4 and 5, the sealing member 500 integrally seals the printed circuit board 100, the circuit board 200, and the terminal 400, so that one end portion connected to the printed circuit board 100 in the terminal 400 and the other end portion on an opposite side are exposed. The sealing member 500 is formed in the shape of an arcuate plate with its plate thickness direction in the normal direction, and accommodates the printed circuit board 100 and the circuit board 200.

More specifically, the sealing member 500 is configured to coincide with an arc of a virtual circle formed around the shaft 10 as its center, similar to the printed circuit board 100. In other words, the sealing member 500 is shaped such that the virtual circle with the sealing member 500 as an arc coincides with a circle formed around the shaft 10 as its center. In the following description, a longitudinal direction in which the arcs formed by the sealing member 500 having an arcuate plate shape extend is referred to as the circumferential direction Db, and a direction extending radially from the center of the arcs formed by the sealing member 500 is referred to as the radial direction Dc. Hereinafter, an example will be described as follows. In the sealing member 500, a portion having an arc plate shape along a shape of the printed circuit board 100 is defined as a main portion 510, and a portion to be connected to an external connector, which is a portion for sealing the terminal 400, is defined as a connector portion 520.

The main portion 510 is formed along the shape of the printed circuit board 100, and at least an inner edge portion is formed to coincide an arc of a virtual circle formed around the shaft 10. The connector portion 520 is, for example, in the shape of a generally rectangular tube extending along the normal direction, and has an opening 520a that exposes the other end of the terminal 400 on the side opposite the main portion 510. The sealing member 500 is made of, for example, a thermosetting resin or a thermoplastic resin. The sealing member 500 functions as a housing portion that houses the printed circuit board 100. The sealing member 500 will be described in detail later.

The above-described configuration is the configuration of the position detection device S1 in the present embodiment. As shown in FIG. 2, the position detection device S1 is disposed in the fixed base 40 to face the rotating flat plate 30 in the axial direction Da. Specifically, as shown in FIGS. 2 and 3, the position detection device S1 is disposed as follows. When the rotating flat plate 30 is rotated, a state where the respective coils 110, 120, and 130 and the protrusion portion 32 of the rotating flat plate 30 face each other in the axial direction Da and a state where both of these do not face each other are alternately repeated. In addition, in the position detection device S1, the sealing member 500 is disposed in the fixed base 40 so that a predetermined gap d is formed with the rotating flat plate 30.

### Signal processing unit:

Next, an operation of the signal processing unit 210 in the above-described circuit board 200 will be described. As shown in FIG. 7, the oscillation unit 220 is connected to both ends of the transmitting coil 110, and applies an alternating current of a predetermined frequency. Two capacitors 161 and 162 are connected in series between both ends of the transmitting coil 110 and the oscillation unit 220, and a portion connecting the capacitors 161 and 162 to each other is connected to ground. The transmitting coil 110 generates the magnetic field in the axial direction Da which passes through the region surrounded by the first receiving coil 120 and the region surrounded by the second receiving coil 130. However, a method for connecting the transmitting coil 110 and the oscillation unit 220 can be appropriately changed. For example, one capacitor may be disposed between both ends of the transmitting coil 110 and the oscillation unit 220.

The demodulation unit 230 is connected to both ends of the first receiving coil 120 and both ends of the second receiving coil 130. The demodulation unit 230 generates a first demodulation signal in which the first voltage value V1 of the first receiving coil 120 is demodulated, and generates a second demodulation signal in which the second voltage value V2 of the second receiving coil 130 is demodulated.

The AD conversion unit 240 is connected to, for example, the demodulation unit 230 and the angle calculation unit 250. The AD conversion unit 240 outputs a first conversion signal S obtained by performing AD conversion on the first demodulation signal and a second conversion signal C obtained by performing AD conversion on the second demodulation signal, to the angle calculation unit 250. The angle calculation unit 250 calculates the rotation angle of the rotating flat plate 30 by, for example, calculating an arctangent function using the first conversion signal S and the second conversion signal C.

The output unit 260 outputs, for example, the rotation angle of the rotating flat plate 30 obtained by the calculation in the angle calculation unit 250 to the output terminal 400.

The power supply unit 300 is connected to each of the units 220, 230, 240, 250, and 260 of the signal processing unit 210, and supplies power to each of the units 220, 230, 240, 250, and 260.

The basic configuration of the signal processing unit 210 has been described above.

Next, a first voltage value V1 of the first receiving coil 120 and a second voltage value V2 of the second receiving coil 130 when the rotating flat plate 30 is rotated will be described.

First, an alternating current of a predetermined frequency is applied from the oscillation unit 220 to the transmitting coil 110. In this manner, a magnetic field in the axial direction Da which passes through a region surrounded by the first receiving coil 120 and a region surrounded by the second receiving coil 130 is generated. The magnetic field is changed due to the alternating current. Therefore, the first voltage value V1 generated in the first receiving coil 120 and the second voltage value V2 generated in the second receiving coil 130 are changed due to electromagnetic induction.

When the protrusion portion 32 of the rotating flat plate 30 face the coil 110, the first receiving coil 120, and the second receiving coil 130, eddy currents are generated in the protrusion portion 32, and a magnetic field is generated due to the eddy currents. Therefore, in the magnetic fields in the axial direction Da which pass through the region surrounded by the first receiving coil 120 and the region surrounded by the second receiving coil 130, the magnetic field which passes through a portion facing the protrusion portion 32 is offset by the magnetic field caused by the eddy current.

As described above, multiple protrusion portions 32 are aligned at an interval in the circumferential direction Db, and the recess 31 is provided between the adjacent protrusion portions 32. In this manner, an area facing the protrusion portion 32 is changed in conjunction with the rotation of the rotating flat plate 30, and a size of a portion facing the protrusion portion 32 in the magnetic fields in the axial direction Da which pass through the region surrounded by the first receiving coil 120 and the region surrounded by the second receiving coil 130 is periodically changed. Therefore, the first voltage value V1 generated in the first receiving coil 120 and the second voltage value V2 generated in the second receiving coil 130 in conjunction with the rotation of the rotating flat plate 30 are periodically changed. In the present embodiment, the first receiving coil 120 is formed in a sine wave shape. Therefore, the first voltage value V1 generated in the first receiving coil 120 has the sine wave shape. The second receiving coil 130 is formed in a cosine wave shape. Therefore, the second voltage value V2 generated in the second receiving coil 130 has the cosine wave shape.

Next, the sealing member 500 will be described in detail. As described above, the sealing member 500 of the present embodiment is a member that seals the printed circuit board 100 and the circuit board 200. The sealing member 500 protects the printed circuit board 100 and the circuit board 200. As shown in FIGS. 4 and 5, the sealing member 500 has the main portion 510 formed in an arc-shaped plate shape extending in the circumferential direction Db, and the connector portion 520 that seals the terminal 400.

More specifically, the main portion 510 has an enclosing part 511 that extends in the circumferential direction Db and encloses the printed circuit board 100 and the circuit board 200, and two plate-shaped mounting parts 512 that are arranged at both ends of the main portion 510 in the circumferential direction Db and are attached to the fixed base 40. The main portion 510 also has two plate-shaped connecting parts 513 that connect the two mounting parts 512 to the enclosing part 511, respectively. The enclosing part 511, the two mounting parts 512, and the two connecting parts 513 are integrally formed.

The enclosing part 511 has an arcuate plate shape extending in the circumferential direction Db, and the connecting parts 513 are connected to both ends thereof in the circumferential direction Db. The enclosing part 511 has both ends in the circumferential direction Db connected to the mounting part 512 via the connecting part 513. The enclosing part 511 corresponds to the arrangement part in which the substrate is arranged.

The two mounting parts 512 are portions through which fastening members for mounting the position detection device S1 to the fixed base 40 are inserted. Each of the two mounting parts 512 is formed with a collar portion 530 through which a fastening member for fixing the sealing member 500 of the position detection device S1 to the fixed base 40 is inserted. The collar portion 530 is configured by disposing a metallic collar 532 in a through-hole 531 penetrating through the main portion 510 in the plate thickness direction. In the present embodiment, the sealing member 500 is fixed to the fixed base 40 by tightening a screw inserted into the collar 532.

The fastening member used to fasten the sealing member 500 to the fixed base 40 is not limited to screw, and fastening member other than screw, such as nut, may be used. Furthermore, the method of fixing the sealing member 500 to the fixed base 40 is not limited to using the fastening member, and it is possible to adopt a method other than fastening, such as welding or adhesion.

The two mounting parts 512 are formed to be shifted in the axial direction Da with respect to the enclosing part 511. That is, the two mounting parts 512 and the enclosing part 511 are arranged offset from each other in the axial direction Da and are formed in a stepped shape. Specifically, the two mounting parts 512 are formed to be shifted relative to the enclosing part 511 in the axial direction Da in the same direction as the direction in which the connector portion 520 protrudes from the main portion 510. Hereinafter, the direction in which the connector portion 520 protrudes from the main portion 510 in the axial direction Da will also be referred to as a first axial direction Da1, and the direction opposite to the first axial direction Da1 in the axial direction Da will also be referred to as a second axial direction Da2. That is, the two mounting parts 512 are formed to be shifted in the first axial direction Da1 with respect to the enclosing part 511.

As shown in FIG. 5, the two mounting parts 512 are formed so that the size in the plate thickness direction (i.e., the size in the axial direction Da) is larger than the size of the enclosing part 511. Specifically, the mounting part 512 is formed so that the size in the axial direction Da is approximately twice as large as the size of the enclosing part 511. However, the size of the mounting part 512 in the axial direction Da is not limited to the above configuration, and may be smaller than twice the size of the enclosing part 511 or may be larger than twice the size of the enclosing part 511. The connecting part 513 is connected between each of the two mounting parts 512 and the enclosing part 511.

The connecting parts 513 are connecting members for connecting the enclosing part 511 and the mounting part 512, and are formed to extend from each of the two mounting parts 512 toward the enclosing part 511. Specifically, the two connecting parts 513 connected to both ends in the circumferential direction Db of the enclosing part 511 are formed in a plate shape extending in the axial direction Da and the circumferential direction Db, and the plate surface is formed to extend along the radial direction Dc. In other words, each of the two connecting parts 513 is formed to be inclined in the second axial direction Da2 from each of the two mounting parts 512 toward the enclosing part 511.

The two connecting parts 513 are arranged next to the enclosing part 511 and the two mounting parts 512 in the circumferential direction Db. Specifically, one of the two mounting parts 512, one of the two connecting parts 513, the enclosing part 511, the other of the two connecting parts 513 and the other of the two mounting parts 512 are arranged in the circumferential direction Db in this order. Therefore, in the present embodiment, the axial direction Da corresponds to the first direction, and the circumferential direction Db corresponds to the second direction. Further, the radial direction Dc intersects with the axial direction Da and the circumferential direction Db. Therefore, the radial direction Dc corresponds to the third direction.

As shown in FIG. 5, the two connecting parts 513 are formed so that the size in the plate thickness direction is substantially equal to the size in the plate thickness direction of the enclosing part 511. In other words, the two connecting parts 513 are formed so that the size in the plate thickness direction is smaller than the size in the plate thickness direction of the mounting part 512.

In contrast, as shown in FIG. 4, the two connecting parts 513 are formed such that the size of the two connecting parts 513 in the radial direction Dc intersecting the axial direction Da and the circumferential direction Db is smaller than the size of the enclosing part 511 in the radial direction Dc. In other words, each of the two connecting parts 513 having a plate surface extending along the radial direction Dc is formed so that its size in the plate width direction is smaller than the size in the plate width direction of the plate-shaped enclosing part 511 extending in the arc direction.

Specifically, the two connecting parts 513 are formed so that the size in the radial direction Dc is approximately half the size of the enclosing part 511 in the radial direction Dc. In addition, the radial size Dc of the connecting part 513 is not limited to this size, and as long as it is smaller than the radial size Dc of the enclosing part 511, it may be smaller than half the size of the enclosing part 511, or it may be larger than half the size of the enclosing part 511.

The reason why the size of the connecting part 513 in the radial direction Dc is formed smaller than the size of the enclosing part 511 will be described below.

In the position detection device S1, the sealing member 500 is fixed to the fixed base 40. Specifically, the position detection device S1 is fixed to the fixed base 40 by screwing a screw, which is a fastening member, inserted into the collar 532 disposed in the through-hole 531 of the mounting part 512 of the sealing member 500. Therefore, the mounting part 512 of the position detection device S1 is fixed to the fixed base 40 in a state in which it cannot move relatively to the fixed base 40. In contrast to this configuration, the connecting part 513 and the enclosing part 511 in the position detection device S1 are not directly fixed to the fixed base 40.

Here, when a temperature change occurs in the environment in which the fixed base 40 and the position detection device S1 are placed, the deformation of the position detection device S1 caused by the temperature change will be considered. For example, when the position detection device S1 is used in an electrification system mounted on a vehicle, temperature changes occur in the environment in which the fixed base 40 and the position detection device S1 are disposed due to changes in the outside air temperature and heat generated when the devices constituting the electrification system are operating. When the environmental temperature in which the fixed base 40 and the position detection device S1 are arranged rises, the fixed base 40 and the sealing member 500 in the position detection device S1 may thermally expand and deform. When the fixed base 40 and the sealing member 500 thermally expand, if there is a difference in the thermal expansion coefficient between the fixed base 40 and the sealing member 500, the amount of deformation between the fixed base 40 and the sealing member 500 will differ. For example, when the thermal expansion coefficient of the sealing member 500 is larger than that of the fixed base 40, the sealing member 500 will deform more than the fixed base 40.

However, in the case where the mounting part 512 of the sealing member 500 is fixed to the fixed base 40 by a fastening member, when the entire sealing member 500 deforms, the mounting part 512 deforms while being fixed to the fixed base 40. In this case, since the mounting part 512 of the sealing member 500 cannot move relative to the fixed base 40, when the connecting part 513 and the enclosing part 511 of the sealing member 500 excluding the mounting part 512 are deformed, there is a risk that the connecting part 513 and the enclosing part 511 will be deformed by warping in the axial direction Da.

As the enclosing part 511 warps and deforms in the axial direction Da, the printed circuit board 100 enclosed in the enclosing part 511 warps together with the enclosing part 511. As a result, the distance between the rotating flat plate 30, which is the detection body, and the first receiving coil 120 and the second receiving coil 130 arranged on the printed circuit board 100 changes. When the distance between the rotating flat plate 30 and each of the first receiving coil 120 and the second receiving coil 130 changes, the magnetic flux passing through each of the first receiving coil 120 and the second receiving coil 130 when detecting the rotation angle of the rotating flat plate 30 changes. This may result in a decrease in detection accuracy when detecting the rotation angle of the rotating flat plate 30.

Furthermore, when the mounting part 512 is fixed to the fixed base 40 by the fastening member, stress caused by thermal expansion of the sealing member 500 is concentrated on the mounting part 512. As a result, there is a risk that the mounting part 512 may be damaged due to stress caused by thermal expansion.

In contrast to these configurations, the sealing member 500 of the present embodiment is formed such that the size of the connecting part 513 in the radial direction Dc is smaller than the size of the enclosing part 511. Therefore, the rigidity of the connecting part 513 is smaller than the rigidity of the enclosing part 511. As a result, when the entire sealing member 500 deforms due to thermal expansion, the connecting part 513 deforms more easily than the enclosing part 511.

Therefore, even if the entire sealing member 500 deforms due to thermal expansion when the mounting part 512 is fixed to the fixed base 40, the amount of deformation of the enclosing part 511 is suppressed by making the connecting part 513 into a shape that is easily deformed. Furthermore, the amount of deformation of the printed circuit board 100 when the printed circuit board 100 enclosed in the enclosing part 511 deforms integrally with the enclosing part 511 is suppressed.

As a result, the amount of change in the distance between the rotating flat plate 30 and the first receiving coil 120 is suppressed. Furthermore, the amount of change in the distance between the rotating flat plate 30 and the second receiving coil 130 is suppressed. The amount of change in the magnetic flux passing through each of the first receiving coil 120 and the second receiving coil 130 when detecting the rotation angle of the rotating flat plate 30 is reduced. This makes it possible to suppress a decrease in detection accuracy when detecting the rotation angle of the rotating flat plate 30.

Furthermore, even if stress occurs in the mounting part 512 of the sealing member 500 due to thermal expansion, by making the connecting part 513 into a shape that is easily deformed, it is possible to reduce the stress concentrated in the mounting part 512. Therefore, damage to the mounting part 512 due to concentration of stress caused by thermal expansion can be suppressed.

### Modification of First Embodiment:

In the above-described first embodiment, an example was described in which the connecting part 513 is formed to have a size in the plate thickness direction that is approximately equal to that of the enclosing part 511 and a size in the radial direction Dc that is smaller than that of the enclosing part 511, but this connecting part is not limited to this configuration. For example, the connecting part 513 may be formed so that its size in the radial direction Dc is approximately equal to that of the enclosing part 511, but its size in the plate thickness direction is smaller than that of the enclosing part 511. Furthermore, the connecting part 513 may be formed to be smaller in size in the plate thickness direction and in the radial direction Dc than the enclosing part 511.

### Second Embodiment:

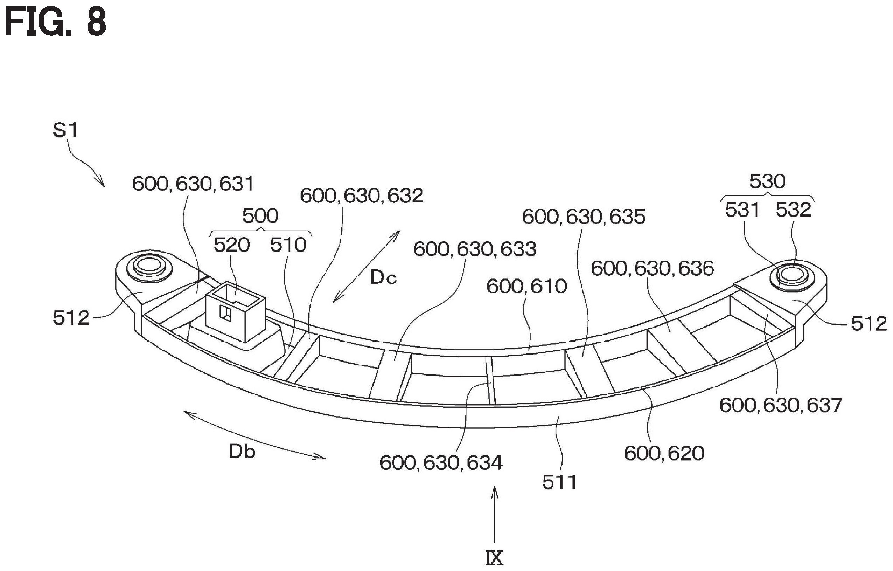

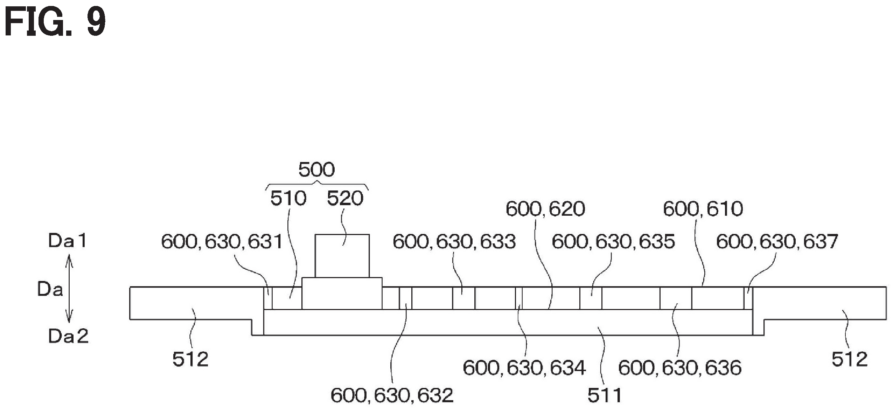

Next, a fourth embodiment will be described with reference to FIGS. 8 and 9. In the present embodiment, the shape of the sealing member 500 is different from that in the first embodiment. The other configurations are the same as those of the first embodiment. Therefore, in the present embodiment, portions different from the first embodiment will be mainly described, and description of portions similar to the first embodiment may be omitted.

As shown in FIGS. 8 and 9, the sealing member 500 of the present embodiment does not have the connecting part 513 in the first embodiment. In contrast, the sealing member 500 of the present embodiment has a plurality of ribs 600. Specifically, the rib 600 includes one inner peripheral rib 610 formed along the inner edge side of the arc-shaped enclosing part 511, and one outer peripheral rib 620 formed along the outer edge side of the enclosing part 511. The rib 600 also includes a plurality of radial ribs 630 formed along the radial direction Dc from the inner edge side to the outer edge side of the arc-shaped enclosing part 511.

The inner peripheral rib 610 extends along the axial direction Da from the end on the inner edge side of the enclosing part 511 toward the opposite side to the side connected to the enclosing part 511. That is, the inner peripheral rib 610 is formed to extend from the end on the inner edge side of the enclosing part 511 along the first axis direction Da1. The inner peripheral rib 610 is formed up to a position where its end on the first axial direction Da1 side overlaps with the end of the mounting part 512 on the first axial direction Da1 side.

The inner peripheral rib 610 is formed on the inner edge of the enclosing part 511 from one end to the other end thereof in the circumferential direction Db. That is, the inner peripheral rib 610 is formed from the mounting part 512 on one side to the mounting part 512 on the other side, which are formed at both ends in the circumferential direction Db of the arc-shaped enclosing part 511.

The outer peripheral rib 620 extends along the axial direction Da from the end on the outer edge side of the enclosing part 511 toward the opposite side to the side connected to the enclosing part 511. That is, the outer peripheral rib 620 is formed to extend from the end on the outer edge side of the enclosing part 511 along the first axis direction Da1. However, the outer peripheral rib 620 is not formed to a position where its end on the first axial direction Da1 side overlaps with the end of the mounting part 512 on the first axial direction Da1 side. That is, the outer peripheral rib 620 is formed so that the size in the axial direction Da is smaller than the size in the axial direction Da of the inner peripheral rib 610.

The outer peripheral rib 620 is formed on the outer edge of the enclosing part 511 from one end to the other end thereof in the circumferential direction Db. That is, the outer peripheral rib 620 is formed from the mounting part 512 on one side to the mounting part 512 on the other side, which are formed at both ends in the circumferential direction Db of the arc-shaped enclosing part 511.

For this reason, the size of the axial direction Da at the portion of the enclosing part 511 where the inner peripheral rib 610 and the outer peripheral rib 620 are formed is larger than the size of the axial direction Da at the portion where the inner peripheral rib 610, the outer peripheral rib 620 and the radial rib 630 are not formed. In the present embodiment, the inner peripheral rib 610 and the outer peripheral rib 620 function as rigid portions.

The inner peripheral rib 610 and the outer peripheral rib 620 are formed so that their size in the radial direction Dc is smaller than the size of the enclosing part 511 in the radial direction Dc. Specifically, the inner peripheral rib 610 and the outer peripheral rib 620 are formed so that the size in the radial direction Dc is smaller than 1/4 (one-fourth) of the size in the radial direction Dc of the enclosing part 511. In addition, the size in the radial direction Dc of the inner peripheral rib 610 is not limited to this configuration, and as long as the size is smaller than the size in the radial direction Dc of the enclosing part 511, the size may be smaller than 1/4 (one-fourth) of the size of the enclosing part 511, or it may be larger than 1/4 (one-fourth) of the size of the enclosing part 511. In the present embodiment, the inner peripheral rib 610 and the outer peripheral rib 620 are formed to have approximately the same size in the radial direction Dc.

Further, each of the inner peripheral rib 610 and the outer peripheral rib 620 is formed so that its size in both the axial direction Da and the radial direction Dc is constant from one end to the other end in the circumferential direction Db. A plurality of radial ribs 630 are connected to the outer side of the inner peripheral rib 610 in the radial direction Dc.

Each of the multiple radial ribs 630 protrudes from one surface 100a of the enclosing part 511 in the first axial direction Da1, and is formed along the radial direction Dc from the end on the inner edge side of the enclosing part 511 to the end on the outer edge side. For this reason, the size of the axial direction Da at the portion of the enclosing part 511 where each of the multiple radial ribs 630 are formed is larger than the size of the axial direction Da at the portion where the inner peripheral rib 610, the outer peripheral rib 620 and the radial rib 630 are not formed. In the present embodiment, the radial ribs 630 function as a rigid portion.

Further, each of the multiple radial ribs 630 has a size in the axial direction Da that decreases from the inside to the outside in the radial direction Dc. That is, each of the multiple radial ribs 630 is formed to be inclined so that the size in the axial direction Da decreases from the inside to the outside in the radial direction Dc.

The multiple radial ribs 630 are formed on the surface 100a and are arranged side by side at predetermined intervals in the circumferential direction Db. In the present embodiment, seven radial ribs 630 are formed on one surface 100a at predetermined intervals in the circumferential direction Db. In the following description, the seven radial ribs 630 aligned in the circumferential direction Db will also be referred to as a first radial rib 631 to a seventh radial rib 637 in the order in which they are aligned in the circumferential direction Db.

The first radial rib 631 is formed at one end of the enclosing part 511 in the circumferential direction Db. That is, the first radial rib 631 is connected to the mounting part 512 that is connected to one side of the enclosing part 511 in the circumferential direction Db. The seventh radial rib 637 is formed at the other end of the enclosing part 511 in the circumferential direction Db. That is, the seventh radial rib 637 is connected to the mounting part 512 that is connected to the other side of the enclosing part 511 in the circumferential direction Db.

The second radial rib 632, the third radial rib 633, the fourth radial rib 634, the fifth radial rib 635 and the sixth radial rib 636 are formed in the stated order in the circumferential direction Db at approximately constant intervals between the first radial rib 631 and the seventh radial rib 637.

In the present embodiment, the sizes of the first radial rib 631 to the seventh radial rib 637 in the circumferential direction Db are not constant. Specifically, the fourth radial rib 634 is formed to have the smallest size in the circumferential direction Db among the first radial rib 631 to the seventh radial rib 637. The fourth radial rib 634 is a rib formed in approximately the center of the enclosing part 511 in the circumferential direction Db.

In contrast, the sixth radial rib 636 is formed to have the largest size in the circumferential direction Db among the first radial rib 631 to the seventh radial rib 637. The third radial rib 633 and the fifth radial rib 635 are formed to have substantially the same size in the circumferential direction Db. The first radial rib 631, the second radial rib 632 and the seventh radial rib 637 are formed to have approximately the same size in the circumferential direction Db.

The reason why the inner peripheral rib 610, the outer peripheral rib 620, and the first to seventh radial ribs 631 to 637 are formed in the enclosing part 511 of the present embodiment will be described below.

In the present embodiment, the inner peripheral rib 610, the outer peripheral rib 620, and the first radial rib 631 to the seventh radial rib 637 are formed in the enclosing part 511, thereby increasing the rigidity of the enclosing part 511 compared to when these ribs are not formed. For example, when the enclosing part 511 is configured to have an inner peripheral rib 610 and an outer peripheral rib 620, the bending rigidity can be improved particularly in the axial direction Da compared to a configuration that does not have the inner peripheral rib 610 and outer peripheral rib 620. Furthermore, when the enclosing part 511 is configured to have the first radial rib 631 to the seventh radial rib 637, the torsional rigidity can be improved in addition to the bending rigidity in the axial direction Da compared to a configuration that does not have these first radial rib 631 to the seventh radial rib 637.

Therefore, when the sealing member 500 entirely deforms due to thermal expansion, the enclosing part 511 is less likely to deform than if the inner peripheral rib 610, the outer peripheral rib 620, and the first radial rib 631 to the seventh radial rib 637 are not formed in the enclosing part 511.

Therefore, even if the entire sealing member 500 is deformed due to thermal expansion while the mounting part 512 is fixed to the fixed base 40, the amount of deformation of the enclosing part 511 is suppressed. Furthermore, the amount of deformation of the printed circuit board 100 when the printed circuit board 100 enclosed in the enclosing part 511 deforms integrally with the enclosing part 511 is suppressed.

As a result, the amount of change in the distance between the rotating flat plate 30 and the first receiving coil 120 is suppressed. Furthermore, the amount of change in the distance between the rotating flat plate 30 and the second receiving coil 130 is suppressed. The amount of change in the magnetic flux passing through each of the first receiving coil 120 and the second receiving coil 130 when detecting the rotation angle of the rotating flat plate 30 is reduced. This makes it possible to suppress a decrease in detection accuracy when detecting the rotation angle of the rotating flat plate 30.

### First Modification of Second Embodiment:

In the above-described second embodiment, an example in which the inner peripheral rib 610, the outer peripheral rib 620, and the radial rib 630 are formed in the enclosing part 511 has been described, but the present disclosure is not limited to this configuration. For example, the enclosing part 511 may be configured to have one or two of the inner peripheral rib 610, the outer peripheral rib 620, and the radial rib 630 formed therein. Specifically, the enclosing part 511 may be configured to have the inner peripheral rib 610 and the outer peripheral rib 620 formed therein, but not to have the radial rib 630 formed therein. In addition, the enclosing part 511 may have the inner peripheral rib 610 and the radial rib 630 formed therein, but may not have the outer peripheral rib 620 formed therein. In addition, the enclosing part 511 may have a configuration in which the outer peripheral rib 620 and the radial rib 630 are formed, and the inner peripheral rib 610 is not formed. Further, the enclosing part 511 may be configured such that only one of the inner peripheral rib 610, the outer peripheral rib 620, and the radial rib 630 is formed.

### Second Modification of Second Embodiment:

In the above-described second embodiment, an example has been described in which seven radial ribs 630 are formed in the enclosing part 511, and the sizes of the seven radial ribs 630 in the circumferential direction Db are not uniform. Further, the seven radial ribs 630 are formed to be inclined so that the size in the axial direction Da decreases from the inside to the outside in the radial direction Dc, but the present disclosure is not limited to this configuration. For example, the number of radial ribs 630 formed in the enclosing part 511 may be less than seven or more than seven. Furthermore, the size of each of the multiple radial ribs 630 formed in the enclosing part 511 in the circumferential direction Db can be changed as appropriate. For example, the size of each of the multiple radial ribs 630 in the circumferential direction Db may be constant. Furthermore, each of the seven radial ribs 630 may be formed with an inclination so that the size in the axial direction Da increases from the inside to the outside in the radial direction Dc, or the size in the axial direction Da may be constant.

### Other Embodiments:

Although representative embodiments of the present disclosure have been described above, the present disclosure is not limited to the embodiments described above, and various modifications can be made, for example, as follows.

In the above embodiment, an example has been described in which the position detection device S1 is applied to an electrification system mounted on a vehicle, but the present disclosure is not limited to this configuration. For example, the position detection device S1 may be mounted on something other than a vehicle.

In the above embodiment, the position detection device S1 detects the rotation angle of a rotating detection object, but the present disclosure is not limited to this configuration. For example, the position detection device S1 may detect the amount of displacement of a linearly moving detection body.

In the above embodiment, the enclosing part 511 and the mounting part 512 are formed to be shifted from each other in the axial direction Da, but the present disclosure is not limited to this configuration. For example, the enclosing part 511 and the mounting part 512 do not have to be formed offset in the axial direction Da.

In the above embodiment, the sealing member 500 is formed in an arcuate plate shape, but the present disclosure is not limited to this configuration. The shape of the sealing member 500 can be appropriately changed to a rectangular plate shape, a circular ring shape, or the like.

In the above embodiment, an example has been described in which the mounting parts 512 are disposed at both ends in the circumferential direction Db of the enclosing part 511 having an arcuate plate shape, but the present disclosure is not limited to this configuration. For example, the mounting part 512 may be disposed at a position different from both ends of the enclosing part 511 in the circumferential direction Db.

In the embodiments described above, it is needless to say that the elements configuring the embodiments are not necessarily essential except in the case where those elements are clearly indicated to be essential in particular, the case where those elements are considered to be obviously essential in principle, and the like.

In the embodiments described above, the present disclosure is not limited to the specific number of components of the embodiments, except when numerical values such as the number, numerical values, quantities, ranges, and the like are referred to, particularly when it is expressly indispensable, and when it is obviously limited to the specific number in principle, and the like.

In the embodiments described above, when referring to the shape, positional relationship, and the like of a component and the like, it is not limited to the shape, positional relationship, and the like, except for the case where it is specifically specified, the case where it is fundamentally limited to a specific shape, positional relationship, and the like, and the like.

The ECU 4 (electric control unit) and the method therefor of the present disclosure may be realized by a dedicated computer provided by including a processor and a memory that are programmed to execute one or more functions embodied by a computer program. The ECU 4 of the present disclosure and the method thereof may be implemented by a dedicated computer provided by including a processor with one or more dedicated hardware logic circuits. The ECU 4 of the present disclosure and the method thereof may be implemented by one or more dedicated computers configured by a combination of a memory and a processor programmed to execute one or more functions and a processor with one or more hardware logic circuits. The computer programs may be stored, as instructions to be executed by a computer, in a tangible non-transitory computer-readable medium.

The following aspects are incorporated in this application in order to preserve the complete disclosure of the parent application:
1. A position detection device, comprising:
   a substrate (100) disposed facing a detection body (30);
   a transmitting coil (110) formed on the substrate;
   a first receiving coil (120) and a second receiving coil (130) disposed inside the transmitting coil in a normal direction relative to a surface direction of the substrate; and
   an accommodation portion (500) that is a plate-shaped structure for accommodating the substrate and has a plate thickness direction in the normal direction, wherein
   the accommodation portion includes an arrangement part (511) in which the substrate is arranged, a mounting part (512) for mounting the accommodation portion, and a connecting part (513) for connecting the mounting part and the arrangement part, and
   a plate thickness direction is defined as a first direction, a direction from the arrangement part toward the mounting part is defined as a second direction, and a direction intersecting the first and second directions is defined as a third direction,
   the connecting part has at least one of two structures: a structure in which a size in the first direction is smaller than a size of the arrangement part in the first direction, and a structure in which a size in the third direction is smaller than a size of the arrangement part in the third direction.
2. The position detection device according to aspect 1, wherein
   the mounting part and the arrangement part are arranged to be shifted from each other in the first direction, and
   the connecting part is formed to extend in the first direction from the mounting part toward the arrangement part.
3. The position detection device according to aspect 1 or 2, wherein
   the arrangement part has an arc-shaped plate shape,
   when a direction in which a circular arc forming the arrangement part extends is defined as a circumferential direction, the second direction is the circumferential direction, and the mounting parts are disposed at both ends of the arrangement part in the circumferential direction via the connecting parts,
   the third direction is a direction radially extending from a center of the arc forming the arrangement part, and
   the size of the connecting part in the third direction is smaller than the size of the arrangement part in the third direction.
4. A position detection device, comprising:
   a substrate (100) disposed facing a detection body (30);
   a transmitting coil (110) formed on the substrate;
   a first receiving coil (120) and a second receiving coil (130) disposed inside the transmitting coil in a normal direction relative to a surface direction of the substrate; and
   an accommodation portion (500) that is a plate-shaped structure for accommodating the substrate and has a plate thickness direction in the normal direction, wherein
   the accommodation portion has an arrangement part (511) in which the substrate is arranged and a mounting part (512) for mounting the accommodation portion,
   the arrangement part has a rigid portion (600, 610, 620, 630, 631, 632, 633, 634, 635, 636, 637) that is formed to be larger in size in the plate thickness direction than other portions of the arrangement part.
5. The position detection device according to aspect 4, wherein
   the arrangement part has an arc-shaped plate shape, and
   the rigid portion is formed along at least one of an inner edge side and an outer edge side of the arrangement part.
6. The position detection device according to aspect 4 or 5, wherein
   the arrangement part has an arc-shaped plate shape, and
   when a direction in which the arc forming the arrangement part extends is defined as a circumferential direction, the plurality of rigid portions are arranged in the circumferential direction.
7. The position detection device according to aspect 6, wherein
   when a direction radially expanding from a center of the arc forming the arrangement part is defined as a radial direction, the rigid portion is formed along the radial direction, and a size in the plate thickness direction becomes smaller from an inside to an outside in the radial direction.

## Claims

1. A position detection device, comprising:
a substrate (100) disposed facing a detection body (30);
a transmitting coil (110) formed on the substrate;
a first receiving coil (120) and a second receiving coil (130) disposed inside the transmitting coil in a normal direction relative to a surface direction of the substrate; and
an accommodation portion (500) that is a plate-shaped structure for accommodating the substrate and has a plate thickness direction in the normal direction, wherein
the accommodation portion has an arrangement part (511) in which the substrate is arranged and a mounting part (512) for mounting the accommodation portion,
the arrangement part has a rigid portion (600, 610, 620, 630, 631, 632, 633, 634, 635, 636, 637) that is formed to be larger in size in the plate thickness direction than other portions of the arrangement part, and
when the plate thickness direction is defined as a first direction, the rigid portion is arranged at a position where at least a part of the rigid portion overlaps with the substrate in the first direction.

2. The position detection device according to claim 1, wherein
the arrangement part has an arc-shaped plate shape, and
the rigid portion is formed along at least one of an inner edge side and an outer edge side of the arrangement part.

3. The position detection device according to claim 1 or 2, wherein
the arrangement part has an arc-shaped plate shape, and
when a direction in which the arc forming the arrangement part extends is defined as a circumferential direction, the plurality of rigid portions are arranged in the circumferential direction.

4. The position detection device according to claim 3, wherein
when a direction radially expanding from a center of the arc forming the arrangement part is defined as a radial direction, the rigid portion is formed along the radial direction, and a size in the plate thickness direction becomes smaller from an inside to an outside in the radial direction.
